# FASCICULE DE BREVET EUROPEEN

(11) **EP 0 448 466 B1**
(45) Date de publication et mention de la délivrance du brevet: **09.03.1994**
(21) Numéro de dépôt: 91400752.1
(22) Date de dépôt: 20.03.1991
(51) Int. Cl.: B01D 61/18, B01D 61/20, B01D 65/02, C02F 1/42

(54) **Perfectionnements apportés aux filtres à membranes, pour ultrafiltration ou microfiltration de liquides, notamment d'eau**
Verbesserungen an Membranfiltern für Ultra- oder Mikrofiltration von Flüssigkeiten, insbesondere von Wasser
Improvements of membrane filters for ultrafiltration or microfiltration of liquids, in particular of water

(30) Priorité: 23.03.1990 FR 9003748
(43) Date de publication de la demande: 25.09.1991
(73) Titulaire: DEGREMONT, 92508 Rueil-Malmaison Cédex (FR)
(72) Inventeur: Vion, Patrick, F-78800 Houilles (FR); Roux, Jean-Pierre, F-75015 Paris (FR)
(74) Mandataire: Armengaud Ainé, Alain

(56) Documents cités:
- FR-A- 2 525 488
- US-A- 3 541 004
- US-A- 3 821 108
- US-A- 4 414 113
- US-A- 4 756 875
- US-A- 4 775 471

## Description

La présente invention concerne des perfectionnements apportés aux appareils destinés à l'ultra ou micro-filtration de liquides, notamment d'eau, au moyen de membranes constituées par des fibres regroupées en faisceaux de forme tubulaire, dans lesquels la filtration se fait de l'intérieur vers l'extérieur de la fibre ("peau interne").

De tels appareils se présentent sous la forme d'une enceinte cylindrique dont les fonds sont bombés et dans laquelle les faisceaux d'éléments filtrants sont, soit disposés entre deux planchers superposés, soit rendus solidaires d'un plancher unique.

Ces appareils sont alimentés en liquide, tel qu'eau à filtrer, et le procédé nécessite une recirculation qui est nécessairement très importante, en raison de la conception de l'élément filtrant et qui peut atteindre dix fois le débit de production, pour assurer un balayage efficace de l'intérieur des fibres constituant les faisceaux.

En outre, ces fibres doivent, à intervalles plus ou moins rapprochés, être débarrassées des particules déposées en surface pendant la filtration par un lavage au moyen d'eau. Ce lavage, appelé rétrolavage, est produit par inversion du sens des pressions dans l'appareil, donc par inversion du sens de l'écoulement au travers de la paroi des fibres, ce qui provoque le décollement de ces particules.

Suivant la technique habituelle, le ou les éléments moteurs de la recirculation, tels que postes de pompage, turbines, hélices ou l'équivalent sont placés en dehors de l'appareil.

Conformément à l'invention et suivant l'une de ses caractéristiques, ce ou ces éléments sont placés dans l'appareil et, avantageusement, placés dans un conduit axial qui est relié au plancher, ou aux planchers, supportant les éléments filtrants.

Suivant une autre caractéristique de l'invention, le fond supérieur de l'appareil comporte une réserve d'eau permettant d'assurer le rinçage final des fibres par simple vidange de l'appareil.

Les divers caractéristiques et avantages de l'invention ressortiront de la description, qui va suivre, de quelques unes de ses formes possibles de réalisation, étant bien entendu qu'il s'agit uniquement d'exemples non limitatifs et que toutes autres formes, proportions et dispositions pourraient être adoptées sans sortir du cadre de l'invention.

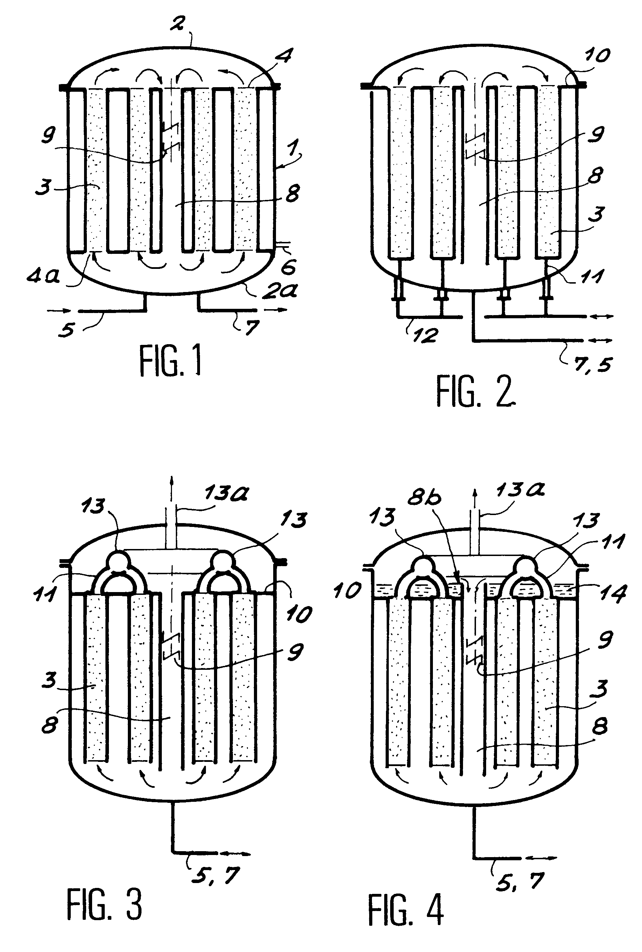

Au cours de cette description, on se réfère au dessin ci-joint dont les Figures 1 à 4 sont des vues en coupe d'appareils conçus suivant l'invention.

Comme connu, l'appareil se présente sous la forme d'une enceinte cylindrique 1 à fonds bombés 2,2a. Cette enceinte contient les éléments filtrants consistant en un ensemble de faisceaux 3 regroupant des fibres creuses d'ultra ou de micro-filtration de type "peau interne", c'est-à-dire dans lesquelles la filtration s'opère de l'intérieur vers l'extérieur de la fibre. Ces faisceaux sont, dans l'exemple traité à la Figure 1, disposés entre deux planchers 4,4a.

Dans ce cas, l'appareil est alimenté en liquide, eau par exemple, à filtrer, par une canalisation 5 débouchant à la base de l'appareil. L'eau traitée, ou perméat, est évacuée de l'intérieur vers l'extérieur d'un faisceau au moyen d'orifices ménagés dans son enveloppe et évacuée de l'appareil par une canalisation 6. Cette canalisation assure l'introduction dans l'appareil du fluide servant au rétrolavage. Enfin, la vidange de l'appareil s'opère par une canalisation 7.

Conformément à l'invention, est prévu ou ménagé, dans l'appareil et suivant son axe, entre les faisceaux de modules filtrants, un espace, constitué dans l'exemple traité, par un conduit 8 dans lequel est disposé l'élément moteur, tel que pompe ou hélices 9, destiné à assurer dans l'appareil la recirculation du liquide à filtrer.

Le conduit 8 affleure les planchers haut et bas, les volumes ainsi dégagés par les fonds bombés 2,2a formant, dans ces conditions, des zones de collecte de la recirculation entrée et sortie des modules.

Cette disposition suivant l'invention, grâce à la suppression de tout organe, moyen ou dispositif, extérieur à l'appareil, offre en particulier les avantages suivants :
- réduction de la surface au sol d'une unité de filtration, donc augmentation de production de liquide traité par unité de surface,
- réduction du coût de réalisation par suppression d'éléments tels que tuyauterie, supports etc...,
- réduction de l'énergie consommée, le gain réalisé correspondant aux pertes de charge créées par les tuyauteries supprimées.

Suivant la forme de réalisation représentée à la Figure 2, l'appareil comporte un plancher unique 10 duquel sont rendus solidaires les faisceaux 3, munis dans ce but d'un carter fixé par sa tranche supérieure au plancher 10.

Dans ce cas, comme il est connu, le perméat est recueilli par un tube perforé 11, placé au centre de chaque faisceau et les différents tubes 11 de collecte du perméat sont reliés à un collecteur unique 12 d'évacuation du perméat à l'extérieur de l'appareil, ce collecteur servant également de canalisation d'amenée à l'appareil du fluide de rétrolavage.

L'appareil de la Figure 3 ne diffère du précédent que par la disposition d'un collecteur 13 d'évacuation du perméat, prévu à l'intérieur de l'appareil, alimentant une tuyauterie d'évacuation 13a et recueillant le perméat drainé par les tubes 11 des faisceaux de fibres.

La Figure 4 montre un appareil à plancher unique 10, perfectionné suivant l'invention, dans lequel le conduit 8 où est logé le moyen 9, pompe ou turbine, assurant la recirculation du liquide à filtrer, est prolongé au-dessus du plancher 10, d'une hauteur 8b, permettant ainsi la formation d'une réserve d'eau 14, qui est en charge, représente un volume supérieur au volume intérieur des fibres, et assure un déplacement du gâteau et le balayage des fibres, par simple vidange, de l'appareil.

## Revendications

1. Appareil destiné à l'ultra ou micro-filtration de liquides, notamment d'eau, au moyen de membranes constituées par des fibres regroupées en faisceaux de forme tubulaire, la filtration se faisant, sous une active recirculation du liquide à filtrer, de l'intérieur vers l'extérieur de la fibre, un tel appareil se présentant sous la forme d'une enceinte cylindrique (1) à fonds bombés (2,2a), dans laquelle les faisceaux d'éléments filtrants (3) sont, soit disposés entre deux planchers superposés (4,4a), soit rendus solidaires d'un plancher unique (10), cet appareil étant caractérisé en ce que le ou les moyens (9) destinés à assurer la recirculation du liquide pendant la filtration sont placés dans l'appareil.

2. Appareil suivant la revendication 1, caractérisé en ce que ces moyens sont placés dans un conduit axial (8) ouvert aux deux extrémités et relié au plancher ou aux planchers, supportant les éléments filtrants.

3. Appareil suivant la revendication 2, caractérisé en ce qu'il comporte, à sa partie supérieure, une réserve de liquide (14) permettant d'assurer le nettoyage des fibres par simple vidange de l'appareil.

4. Appareil suivant la revendication 3, caractérisé en ce que la réserve de liquide est constituée par la prolongation du conduit axial (8) dans la zone située au-dessus du plancher (10).

## Patentansprüche

1. Vorrichtung zur Ultra- oder Mikroflitration von Flüssigkeiten, insbesondere von Wasser, mittels Membranen, die aus in röhrenförmigen Bündeln angeordneten Fasern bestehen, wobei die Filtration - bei einer aktiven Rezirkulation der zu filtrierenden Flüssigkeit - vom Inneren zum Äußeren der Faser hin stattfindet und wobei diese Vorrichtung die Form eines mit gewölbten Böden (2,2a) versehenen zylindrischen Gehäuses (1) hat, in dem die Bündel von Filterelementen (3) entweder zwischen zwei übereinanderliegenden Zwischenböden (4,4a) angeordnet sind oder mit einem einzigen Zwischenboden (10) fest verbunden sind, wobei diese Vorrichtung **dadurch gekennzeichnet** ist, daß die für die Gewährleistung der Rezirkulation der Flüssigkeit während der Filtration bestimmte(n) Einrichtung(en) (9) in der Vorrichtung angeordnet sind/ist.

2. Vorrichtung nach Anspruch 1, **dadurch gekennzeichnet,** daß diese Einrichtungen in einem an beiden Enden offenen und mit dem/den die Filterelemente tragenden Zwischenboden/-böden verbundenen axialen Kanal (8) angeordnet sind.

3. Vorrichtung nach Anspruch 2, **dadurch gekennzeichnet,** daß sie im oberen Bereich einen Flüssigkeitsvorrat (14) enthält, der es ermöglicht, die Reinigung der Fasern durch einfache Entleerung der Vorrichtung zu gewährleisten.

4. Vorrichtung nach Anspruch 3, **dadurch gekennzeichnet,** daß der Flüssigkeitsvorrat von der Verlängerung des axialen Kanals (8) in dem über dem Zwischenboden (10) gelegenen Bereich dargestellt wird.

## Claims

1. Apparatus intended for the ultrafiltration or microfiltration of liquids, especially water, by means of membranes composed of fibres grouped into bundles of tubular shape, the filtration taking place, with an active recirculation of the liquid to be filtered, from the inside to the outside of the fibre, such an apparatus being in the form of a cylindrical container (1) having domed ends (2, 2a), in which the bundles of filtering elements (3) are either disposed between two plates (4, 4a) one above the other, or are firmly fixed to a single plate (10), this apparatus being characterized in that the means (9) intended for assuring the recirculation of the liquid during filtration are situated inside the apparatus.

2. Apparatus according to Claim 1, characterized in that the means are situated in an axial duct (8), open at both ends and connected to the plate or plates which support the filtering elements.

3. Apparatus according to Claim 2, characterized in that it comprises, in its upper part, a reserve of liquid (14) enabling the cleaning of the fibres to be carried out by simply emptying the apparatus.

4. Apparatus according to Claim 3, characterized in that the reserve of liquid is formed by the continuation of the axial duct (8) into the zone situated above the plate (10).
